# EUROPÄISCHE PATENTSCHRIFT

(11) **EP 3 378 153 B1**
(45) Veröffentlichungstag und Bekanntmachung des Hinweises auf die Patenterteilung: **08.01.2020**
(21) Anmeldenummer: 16797526.7
(22) Anmeldetag: 15.11.2016
(51) Int. Cl.: H02N 2/02, H02N 2/06

(54) **PIEZO-AKTUATOR MIT MEHREREN PIEZOELEMENTEN**
PIEZO ACTUATOR WITH SEVERAL PIEZOELEMENTS
PIÉZO-ACTUATEUR AVEC PLUSIEURS PIÉZOÉLÉMENTS

(30) Priorität: 17.11.2015 DE 102015119816
(43) Veröffentlichungstag der Anmeldung: 26.09.2018
(73) Patentinhaber: V.I.E. Systems GmbH, 8541 Schwanberg (AT)
(72) Erfinder: SCHEICHER, Johann, 8542 St. Peter i.S. (AT)
(74) Vertreter: Keilitz, Wolfgang
(86) Internationale Anmeldenummer: PCT/EP2016/077736
(87) Internationale Veröffentlichungsnummer: WO 2017/085059

(56) Entgegenhaltungen:
- DE-A1-102007 044 751
- US-A1- 2010 118 405

## Beschreibung

### FACHGEBIET DER ERFINDUNG

Die Erfindung betrifft einen Piezo-Aktuator mit mehreren Piezoelementen, die durch Anlegen einer elektrischen Spannung eine mechanische Bewegung ausführen, sowie ein Verfahren zum Betreiben eines solchen Piezo-Aktuators.

Piezoelemente haben die Eigenschaft, dass sie sich, sobald man eine positive elektrische Spannung anlegt, in einer Längsrichtung ausdehnen, wobei gleichzeitig immer auch eine Kontraktion orthogonal zur Längsrichtung stattfindet. Diese Eigenschaft kann dazu genutzt werden, eine Kraft zu übertragen oder einen elektromechanischen Antrieb zu realisieren.

Bei bekannten Piezo-Aktuatoren mit mehreren in Reihe angeordneten Piezoelementen erfolgt die Ansteuerung der einzelnen Piezoelemente meist durch eine elektrische Parallelschaltung mit der gleichen Polarisierung. Wird an einem solchen Aktuator eine Spannung angelegt, dehnen sich alle Piezoelemente gleichzeitig aus oder kontrahieren gleichzeitig, wodurch eine Vorwärts- oder Rückwärtsbewegung initiiert wird. Dadurch können zwar mit relativ kleinen Spannungen bereits relativ große Bewegungsamplituden erreicht werden, eine solche Konfiguration hat allerdings den Nachteil, dass der Piezo-Aktuator nur in einer Richtung eine hohe Kraft ausüben kann, nämlich wenn die Piezoelemente im Druckmodus arbeiten, d.h. wenn sie sich ausdehnen. In der anderen Richtung ist die Kraft dagegen deutlich geringer, da die Piezoelemente im Zugmodus aus physikalischen Gründen nur wesentlich geringere Kräfte ausüben können. Für Anwendungen, bei denen in beide Richtungen gleich große Kräfte ausgeübt werden müssen, ist diese Konfiguration daher nicht geeignet.

Aus der DE 30 37 078 A1 ist ein Piezo-Aktuator mit mehreren Piezoelementen bekannt, die durch Anlegen einer elektrischen Spannung eine mechanische Bewegung ausführen. Der Piezo-Aktuator umfasst ferner eine Steuerung, die ein erstes Piezoelement derart ansteuert, dass es sich mechanisch in einer Längsrichtung ausdehnt, und ein zweites Piezoelement derart ansteuert, dass es mechanisch in der Längsrichtung kontrahiert. Diese Anordnung hat jedoch den Nachteil, dass die von den beiden Piezoelementen bewirkte Bewegung in entgegengesetzte Richtungen erfolgt. Ein ähnlich aufgebauter Piezo-Aktuator mit mehreren Piezoelementen, die durch Anlegen einer elektrischen Spannung eine mechanische Bewegung ausführen, ist aus der US 2010/0118405 A1 bekannt. Weitere Piezo-Aktuatoren mit mehreren Piezoelementen, die durch Anlegen einer elektrischen Spannung eine mechanische Bewegung ausführen, sind aus der JP H06-343273 A, der DE 199 16 277 A1, der WO 99/59211 A1 der DE 199 18 976 A1 oder der DE 10 2007 044 751 A1 bekannt.

### HINTERGRUND DER ERFINDUNG

Es ist daher eine Aufgabe der vorliegenden Erfindung einen Piezo-Aktuator zu schaffen, dessen Vorwärts- und Rückwärtsbewegung präziser eingestellt werden kann.

Gelöst wird diese Aufgabe gemäß der Erfindung durch die in den unabhängigen Ansprüchen 1, 13 und 14. Weitere Ausgestaltungen der Erfindung ergeben sich aus den Unteransprüchen.

Gemäß der Erfindung wird ein Piezo-Aktuator mit mehreren Piezoelementen vorgeschlagen, von denen wenigstens ein erstes und ein zweites als Arbeitselemente betrieben werden, die in einer Arbeitsphase eine lineare Vorwärts- oder Rückwärtsbewegung bewirken. Der Piezo-Aktuator umfasst ferner wenigstens ein weiteres Piezoelement (Einstellelement), das dazu dient die Piezoelement-Anordnung innerhalb des Piezo-Aktuators vorzuspannen beziehungsweise eine Null-Position des Piezo-Aktuators einzustellen, ausgehend von der der Piezo-Aktuator in der nachfolgenden Arbeitsphase eine Vorwärts- oder Rückwärtsbewegung ausführt.

Der Betrieb eines erfindungsgemäßen Piezo-Aktuators untergliedert sich im Wesentlichen in wenigstens zwei Phasen, nämlich eine erste Phase, in der eine Null-Position des Piezo-Aktuators eingestellt wird (Null-Position-Einstellphase), und eine nachfolgende Arbeitsphase, in der der Piezo-Aktuator eine Vorwärts- oder Rückwärtsbewegung ausführt.

Die Null-Position kann entweder durch einfaches Vorspannen der im Piezo-Aktuator angeordneten Piezoelemente (erste Methode) oder durch gezielte Ansteuerung eines oder mehrerer Piezoelemente (zweite Methode), z. B. im Rahmen einer Regelung, eingestellt werden.

Im Falle der ersten Methode wird die Piezoelement-Anordnung innerhalb des Piezo-Aktuators einfach vorgespannt, um ein mögliches Spiel auszugleichen. Zu diesem Zweck wird wenigstens ein Piezoelement derart angesteuert, dass sich die Anordnung insgesamt mechanisch ausdehnt. So kann z. B. an das wenigstens eine weitere Piezoelement eine konstante Spannung angelegt werden, wodurch es bzw. sie sich mechanisch ausdehnen. Alternativ oder zusätzlich kann auch an die Arbeitselemente eine positive Spannung angelegt werden, um sie vorzuspannen. Die an die Arbeitselemente angelegte Spannung ist vorzugsweise jeweils gleich groß. Durch das Anlegen einer Spannung an die Arbeitselemente und/oder das wenigstens eine weitere Piezoelement verspannt sich die Piezo-Anordnung innerhalb des Piezo-Aktuators. Der Piezo-Aktuator nimmt dann eine entsprechende Null-Position ein, die in diesem Fall mehr oder weniger zufällig ist. Sie wird durch die Konstruktion des Piezo-Aktuators und die an den Piezoelementen anliegenden Spannungen bestimmt. Ausgehend von der so eingestellten (zufälligen) Null-Position werden die Arbeitselemente - und gegebenenfalls auch das wenigstens eine weitere Piezoelement - in der nachfolgenden Arbeitsphase dann so angesteuert, dass der Piezo-Aktuator eine gewünschte Vorwärts- oder Rückwärtsbewegung ausführt.

Im Falle der zweiten Methode wird der Piezo-Aktuator in eine definierte, vom Nutzer einstellbare Null-Position gefahren. Hierzu wird an das wenigstens eine weitere Piezoelement (Einstellelement) jeweils eine definierte Spannung angelegt, die so bemessen ist, dass der Piezo-Aktuator in die gewünschte Null-Position fährt. Diese Position kann z. B. automatisch oder durch einen Nutzer im Rahmen einer Regelung eingestellt und nach Wunsch verändert werden. Die Arbeitselemente können währenddessen z. B. mit einer konstanten positiven Spannung betrieben werden, die so gepolt ist, dass sich die Arbeitselemente in der Längsrichtung ausdehnen. Die an die Arbeitselemente angelegte Spannung ist vorzugsweise jeweils gleich groß. Während der Einstellung der Null-Position mit Hilfe des wenigstens einen weiteren Piezoelements bleibt die an den Arbeitselementen anliegende Spannung vorzugsweise konstant. Ausgehend von der so eingestellten Null-Position werden die Arbeitselemente (und gegebenenfalls auch das wenigstens eine weitere Piezoelement) in der Arbeitsphase dann so angesteuert, dass der Piezo-Aktuator eine gewünschte Vorwärts- oder Rückwärtsbewegung ausführt.

Der Betrieb eines erfindungsgemäßen Piezo-Aktuators mit wenigstens zwei Arbeitselementen und wenigstens einem weiteren Piezoelement für die NullpunktEinstellung wird im Folgenden anhand zweier Beispiele kurz erläutert:
Bei einer Ausführungsform eines Piezo-Aktuators mit einem einzigen weiteren Piezoelement (Einstellelement) wird an das Einstellelement vorzugsweise eine Spannung angelegt, die so gepolt ist, dass sich das Einstellelement ausdehnt. Um die Null-Position exakt einzustellen, wird die Spannung so lange verändert, bis sich die gewünschte Null-Position eingestellt hat (zweite Methode). Wenn der Nullpunkt nicht exakt eingestellt werden muss, reicht es auch aus, das Einstellelement mit einer beliebigen Spannung zu beaufschlagen, so dass es sich ausdehnt und die gesamt Piezo-Anordnung innerhalb des Piezo-Aktuators verspannt (erste Methode). An den Arbeitselementen liegt währenddessen vorzugsweise eine im Wesentlichen konstante, positive Spannung an, so dass sich die Arbeitselemente in einem ausgedehnten Zustand befinden. Die Null-Position kann somit sehr präzise eingestellt werden.

Bei einer Ausführungsform des Piezo-Aktuators mit mehreren Einstellelementen wird an die Einstellelemente vorzugsweise eine Spannung angelegt, die so gepolt ist, dass sich jedes der Einstellelemente ausdehnt. Dadurch verspannt sich die Piezo-Anordnung innerhalb des Piezo-Aktuators. Die an die Einstellelemente angelegten Spannungen sind vorzugsweise gleich groß. Durch Veränderung der an den einzelnen Einstellelementen anliegenden Spannung wird der Piezo-Aktuator dann in die gewünschte Null-Position gebracht. Hierzu kann z. B. die an einem ersten Einstellelement anliegende Spannung erhöht und die an einem zweiten Einstellelement anliegende Spannung reduziert werden, so dass sich wenigstens eines der Einstellelemente ausdehnt und wenigstens ein anderes zusammenzieht. Der Piezo-Aktuator führt dadurch eine Vorwärts- oder Rückwärtsbewegung aus. An den Arbeitselementen kann währenddessen auch eine im Wesentlichen konstante, positive Spannung anliegen, so dass sich die Arbeitselemente in einem ausgedehnten Zustand befinden. Die an den Arbeitselementen anliegende Spannung bleibt während der Einstellung der Null-Position vorzugsweise konstant. Die Null-Position kann somit sehr präzise eingestellt werden..

In der ersten Phase werden die Arbeitselemente vorzugsweise vorgespannt, indem sie mit einer im Wesentlichen konstanten Spannung betrieben werden. Die an den Arbeitselementen anliegenden Spannungen sind vorzugsweise gleich groß. Die Spannung beträgt vorzugsweise etwa 50%, insbesondere zwischen 40 % und 60 % einer maximalen Spannung, die der maximalen Längenänderung eines Piezoelements entspricht. Beträgt die Spannung, die für eine maximale Längenänderung eines Arbeitselements erforderlich ist, beispielsweise 100 V, so wird das Arbeitselement z. B. mit 50 V - also etwa dem halben Hubweg - vorgespannt. Die Hubbewegung des Piezo-Aktuators wird dann ausgehend von dem an den Arbeitselementen eingestellten Spannungsniveau durchgeführt.

Gemäß einer ersten Ausführungsform der Erfindung dient das wenigstens eine Einstellelement ausschließlich zum Einstellen der Null-Position. In diesem Fall bleibt die am wenigstens einen Einstellelement anliegende Spannung in der folgenden Arbeitsphase im Wesentlichen konstant. Die Vorwärts- oder Rückwärtsbewegung des Piezo-Aktuators wird ausschließlich von den Arbeitselementen ausgeführt; das Einstellelement trägt zu der Vorwärts- oder Rückwärtsbewegung nichts bei.

Gemäß einer zweiten Ausführungsform der Erfindung dient das wenigstens eine Einstellelement zunächst zum Einstellen der Null-Position, wie vorstehend beschrieben wurde. In der nachfolgenden Arbeitsphase wird das wenigstens eine Einstellelement dann aber so betrieben, dass es bzw. die Einstellelemente einen Beitrag zur Vorwärts- oder Rückwärtsbewegung des Piezo-Aktuators liefert bzw. liefern. Hierzu kann z. B. die an einem ersten Einstellelement anliegende Spannung erhöht und die an einem zweiten Einstellelement anliegende Spannung reduziert werden, so dass sich wenigstens eines der Einstellelemente ausdehnt und wenigstens ein anderes kontrahiert. Bei einem Piezo-Aktuator mit insgesamt vier Piezoelementen kann dadurch der Hubweg verdoppelt werden.

Der Piezo-Aktuator umfasst vorzugsweise eine Steuerung, die die einzelnen Piezoelemente, abhängig von der Ausführungsform, wie vorstehend beschrieben ansteuert.

Unter der Bezeichnung "Null-Position" wird eine Position des Piezo-Aktuators verstanden, ausgehend von der eine Vorwärts- oder Rückwärtsbewegung ausgeführt wird. Die "Null-Position" definiert somit eine Art Startpunkt für die nachfolgende Vorwärts- oder Rückwärtsbewegung mit Hilfe der Arbeitselemente.

"Einstellelemente" sind solche Piezoelemente, die zur Einstellung einer Null-Position dienen. In der Arbeitsphase werden sie vorzugsweise mit einer konstanten Spannung betrieben, so dass sie zu einer Vorwärts- oder Rückwärtsbewegung des Piezo-Aktuators nichts beitragen. Wahlweise können sie aber auch so betrieben werden, dass sie in der Arbeitsphase an der Vorwärts- oder Rückwärtsbewegung des Piezo-Aktuators mitwirken.

"Arbeitselemente" sind solche Piezoelemente, die in der Arbeitsphase zu einer Vorwärts- oder Rückwärtsbewegung des Piezo-Aktuators beitragen. In der Null-Position-Einstellphase werden sie vorzugsweise mit einer im Wesentlichen konstanten Spannung betrieben.

Die Polarisationsrichtung der Arbeitselemente ist vorzugsweise für alle Arbeitselemente gleich. D.h., die Arbeitselemente sind vorzugsweise alle in der gleichen Richtung ausgerichtet.

Die Polarisationsrichtung des wenigstens einen Einstellelements ist vorzugsweise dieselbe wie die Polarisationsrichtung der Arbeitselemente. D.h., das wenigstens eine Einstellelement ist vorzugsweise in der gleichen Richtung ausgerichtet wie die Arbeitselemente.

Die Polarisationsrichtung der Arbeitselemente entspricht vorzugsweise derjenigen Richtung, in der in der genannten Arbeitsphase die Vorwärts- oder Rückwärtsbewegung (Hubbewegung) stattfindet. Diese Richtung wird auch als "Längsrichtung" bezeichnet. Die Piezoelemente des erfindungsgemäßen Piezo-Aktuators sind so angeordnet, dass sie auf denselben Gegenstand wirken, d.h. die Ausdehnung oder das Zusammenziehen jedes Piezoelements führt zu einer entsprechenden Bewegung des Gegenstands, wie z. B. eines Schlittens, eines Stempels, einer Platte oder dergleichen.

Die Piezoelemente des erfindungsgemäßen Piezo-Aktuators sind vorzugsweise in Reihe angeordnet, beispielsweise zwei oder mehr Piezoelemente in Reihe. Sie können aber auch parallel angeordnet sein, beispielsweise zwei oder mehr Piezoelemente parallel.

Bei einer Parallelanordnung sind die Piezoelemente in einer Querrichtung über- bzw. nebeneinander in "Reihen" angeordnet. Jede Reihe kann dabei ein oder mehrere Piezoelemente umfassen. Die einzelnen nebeneinander liegenden Piezoelemente können parallel bündig angeordnet sein; sie können aber auch in Längsrichtung versetzt angeordnet sein.

Die Arbeitselemente werden vorzugsweise derart angesteuert, dass die längenmäßige Ausdehnung des wenigstens einen ersten Piezoelements synchron mit der längenmäßigen Kontraktion des wenigstens einen zweiten Piezoelements einhergeht. Dies kann erreicht werden, indem die an den Piezoelementen anliegenden Spannungen gleichzeitig um den gleichen Betrag verändert werden - d.h. an wenigstens einem der Piezoelemente erhöht und an wenigstens einem anderen der Piezoelemente gleichzeitig um denselben Betrag verringert wird. Die Änderung der an den Arbeitselementen anliegenden Spannungen könnte alternativ aber auch zeitlich versetzt erfolgen. So könnte z. B. die Spannung an einem ersten Arbeitselement erhöht und erst zeitlich versetzt an einem zweiten Arbeitselement verringert werden.

Gemäß einer bevorzugten Ausführungsform der Erfindung ist zwischen zwei in Reihe angeordneten Piezoelemente ein ortsfest angeordnetes Widerlager vorgesehen, an dem sich die Piezoelemente im Betrieb abstützen. Wenn sich der Piezo-Aktuator vor oder zurück bewegt, nimmt das Widerlager jeweils die von dem bzw. den sich ausdehnenden Piezoelementen ausgeübte Kraft auf.

Bei einer Parallelanordnung der Piezoelemente hat jede Reihe vorzugsweise ein zugehöriges Widerlager, an dem sich das bzw. die Piezoelemente einer Reihe abstützt bzw. abstützen.

Die Piezoelemente sind vorzugsweise innerhalb eines Schlittens angeordnet, der die Piezo-Anordnung umgibt und die Vorwärts- oder Rückwärtsbewegung ausführt. Der Schlitten ist vorzugsweise einstückig gebildet und umgibt die Piezo-Anordnung vorzugsweise entlang eines geschlossenen Umfangs.

Der Schlitten ist vorzugsweise innerhalb eines Gehäuses beweglich angeordnet. Der Piezo-Aktuator ist vorzugsweise so konstruiert, dass der Schlitten eine gerade Linearbewegung ausführt.

Gemäß einer bevorzugten Ausführungsform der Erfindung ist wenigstens ein Teil der Piezoelemente in einer Halterung angeordnet, die dazu dient, den Zusammenbau des Piezo-Aktuators zu vereinfachen. Die Halterung kann beispielsweise ein oder mehrere Piezoelemente aufnehmen, die dann gemeinsam zusammen mit der Halterung in den Schlitten eingesetzt werden.

Die Halterung wird vorzugsweise an einem den Schlitten umgebenden Gehäuse montiert und umfasst hierzu entsprechende Befestigungsmittel, wie z. B. Bohrungen mit Innengewinde.

Gemäß einer speziellen Ausführungsform der Erfindung umfasst die Halterung mehrere Kammern, in denen jeweils ein Piezoelement angeordnet ist.

Die Halterung ist vorzugsweise derart ausgebildet, dass sie das wenigstens eine Piezoelement jeweils an einem mittleren Abschnitt festklemmt. An den Endabschnitten der Piezoelemente ist vorzugsweise ein Freiraum vorgesehen, d. h. die Piezoelemente werden dort nicht von der Seite her festgeklemmt.

Gemäß einer Ausführungsform der Erfindung ist die Halterung derart ausgelegt, dass sie mehrere, vorzugsweise zwei Piezoelemente entlang eines geschlossenen Umfangs umgibt. In diesem Fall umfasst die Halterung sowohl in Längsrichtung verlaufende Abschnitte als auch quer zur Längsrichtung verlaufende Abschnitte, wobei letztere mit den voneinander weg zeigenden, äußeren Enden der Piezoelemente in Kontakt stehen. Die quer verlaufenden Abschnitte der Halterung sind dabei vorzugsweise flexibel ausgebildet, so dass sie sich bei einer Expansion bzw. Kontraktion der Piezoelemente elastisch verformen können.

Die erfindungsgemäße Halterung kann auch ein Widerlager umfassen. In diesem Fall ist das vorstehend erwähnte Widerlager, an dem sich die Piezoelemente im Betrieb abstützen, Teil der Halterung. Das Widerlager kann aber auch Teil des Gehäuses sein. Es kann z. B. einstückig mit dem Gehäuse gebildet oder als separates Element ausgebildet sein, das am Gehäuse fest montiert ist.

Gemäß einer Ausführungsform der Erfindung kann die Halterung spezielle Befestigungsmittel umfassen, mit denen die Halterung in zwei orthogonal zueinander stehenden Raumachsen mit dem Gehäuse verbunden werden kann. Gemäß einer Ausführungsform können z. B. in einer ersten Raumachse mehrere Bohrungen mit Innengewinde, und in einer dazu orthogonalen Raumachse seitlich vorstehende Zapfen vorgesehen sein. Die beiden Raumachsen stehen vorzugsweise senkrecht zur Längsrichtung der Piezoanordnung.

Die einzelnen Piezoelemente des erfindungsgemäßen Piezo-Aktuators sind bezüglich des Widerlagers vorzugsweise symmetrisch angeordnet, d. h., auf jeder Seite des Widerlagers befindet sich eine gleich große Anzahl von Piezoelementen.

Gemäß einer ersten Ausführungsform der Erfindung umfasst der Piezo-Aktuator insgesamt zwei Piezoelemente, es können aber auch beispielsweise vier, sechs oder mehr Piezoelemente sein. Die Gesamtzahl der Piezoelemente ist vorzugsweise eine gerade Zahl, z. B. 4, 6 oder 8, kann aber auch eine ungerade Zahl sein, wie z. B. 3, 5 oder 7.

Die Erfindung betrifft außerdem ein Verfahren zum Betreiben eines Piezo-Aktuators mit zwei Piezoelementen, um eine lineare Vorwärts- oder Rückwärtsbewegung auszuführen. Hierzu wird erfindungsgemäß zunächst eine Null-Position des Piezo-Aktuators eingestellt, indem an wenigstens eines der Piezoelemente eine Spannung angelegt wird, so dass sich die Piezoelemente innerhalb des Aktuators verspannen und sich eine bestimmte Null-Position einstellt.

Vorzugsweise wird an beide Piezoelemente eine konstante, vorzugsweise gleich große Spannung angelegt. Von dem in der ersten Phase herrschenden Spannungsniveau ausgehend wird dann in der nachfolgenden Arbeitsphase eine Vorwärts- oder Rückwärtsbewegung ausgeführt, indem die an den beiden Piezoelementen anliegenden Spannungen so variiert werden, dass sich sowohl zum Ausführen einer Vorwärtsbewegung als auch zum Ausführen einer Rückwärtsbewegung wenigstens eines der Arbeitselemente mechanisch ausdehnt, und ein anderes der Arbeitselemente mechanisch kontrahiert. Hierzu wird eine der Spannungen erhöht und die andere verringert. Die Spannungsänderung an den beiden Piezoelementen erfolgt vorzugsweise jeweils um den im Wesentlichen gleichen Betrag. Die Spannungserhöhung und -senkung erfolgen außerdem vorzugsweise im Wesentlichen gleichzeitig. Dies hat den Vorteil, dass der Piezo-Aktuator eine kontinuierliche und gleichmäßige Hubbewegung ausführt.

Die Erfindung betrifft außerdem ein Verfahren zum Betreiben eines Piezo-Aktuators mit wenigstens drei Piezoelementen, von denen wenigstens zwei als Arbeitselemente dienen, um eine lineare Vorwärts- oder Rückwärtsbewegung auszuführen, und wenigstens eines als Einstellelement dient, um eine Null-Position des Piezo-Aktuators einzustellen. Der Betrieb des Piezo-Aktuators untergliedert sich im Wesentlichen in zwei Phasen, nämlich eine erste Phase (Null-Position-Einstellphase), in der eine gewünschte Null-Position des Piezo-Aktuators eingestellt wird, und eine nachfolgende zweite Phase (Arbeitsphase), in der der Piezo-Aktuator eine Vorwärts- oder Rückwärtsbewegung ausführt.

Die Null-Position kann entweder durch einfaches Vorspannen der im Piezo-Aktuator angeordneten Piezoelemente (erste Methode) oder durch gezielte Ansteuerung eines oder mehrerer Piezoelemente z. B. im Rahmen einer Regelung (zweite Methode) eingestellt werden, wie vorstehend bereits beschrieben wurde.

Nach der Null-Position-Einstellung wird dann mit Hilfe der Arbeitselemente (und ggf. auch mit Hilfe des bzw. der Einstellelemente) eine Vorwärts- oder Rückwärtsbewegung ausgeführt, indem die an den Arbeitselementen anliegenden Spannungen so variiert werden, dass sich sowohl zum Ausführen einer Vorwärtsbewegung als auch zum Ausführen einer Rückwärtsbewegung ein erstes Arbeitselement mechanisch ausdehnt und ein zweites Arbeitselement mechanisch kontrahiert. Das vorstehend beschriebene Verfahren macht es zum Einen möglich, die Null-Position des Piezo-Aktuators sehr präzise einzustellen. Zum Anderen können in beide Richtungen jeweils hohe Kräfte übertragen werden, da sich immer wenigstens eines der Arbeitselemente ausdehnt und der Piezo-Aktuator somit immer im Druckmodus arbeitet.

Sowohl die Vorwärts- als auch die Rückbewegung werden vorzugsweise von denselben Piezoelementen ausgeführt. Zum Ausführen einer Vorwärtsbewegung wird z. B. ein erstes Piezoelement derart angesteuert, dass es sich mechanisch in einer Längsrichtung ausdehnt, und ein zweites Piezoelement derart angesteuert, dass es mechanisch in der Längsrichtung kontrahiert. Zum Ausführen der entgegengesetzten Bewegung wird vorzugsweise das zweite Piezoelement derart angesteuert, dass es sich mechanisch in der Längsrichtung ausdehnt, und das erste Piezoelement derart angesteuert, dass es mechanisch in der Längsrichtung kontrahiert. Alternativ könnte die erste Bewegung (z. B. eine Vorwärtsbewegung) aber auch von einer ersten Gruppe von Piezoelementen, und die Rückwärtsbewegung von einer unterschiedlichen zweiten Gruppe von Piezoelementen ausgeführt werden.

Gemäß einer bevorzugten Ausführungsform der Erfindung umfasst der Piezo-Aktuator insgesamt vier Piezoelemente, nämlich zwei Arbeitselemente und zwei Einstellelemente. Die Piezoelemente sind vorzugsweise in Reihe angeordnet. Für die Null-Position-Einstellung wird an die Arbeitselemente eine konstante Spannung angelegt, die bewirkt, dass sich die Arbeitselemente ausdehnen. Die Null-Position wird dann mit Hilfe der Einstellelemente eingestellt, wobei die an einem ersten Einstellelement anliegende Spannung vorzugsweise erhöht und die an einem zweiten Einstellelement anliegende Spannung reduziert wird, so dass sich eines der Einstellelemente ausdehnt und das andere kontrahiert. Die an den Arbeitselementen anliegende Spannung bleibt währenddessen vorzugsweise konstant. In der nachfolgenden Arbeitsphase wird dann die an einem ersten Arbeitselement anliegende Spannung erhöht und die an einem zweiten Arbeitselement anliegende Spannung reduziert, so dass sich eines der Arbeitselemente ausdehnt und das andere kontrahiert. Dadurch erfolgt eine Vorwärts- oder Rückwärtsbewegung. Die an den Einstellelementen anliegende Spannung bleibt währenddessen vorzugsweise konstant. Ein solcher Piezo-Aktuator mit insgesamt vier Piezoelementen, der wie vorstehend beschrieben betrieben wird, erlaubt eine besonders präzise Einstellung der Null-Position und hohe Kräfte in beide Bewegungsrichtungen.

### KURZE BESCHREIBUNG DER ZEICHNUNGEN

Die Erfindung wird nachstehend anhand der beigefügten Zeichnungen beispielhaft näher erläutert. Es zeigen:
- Fig. 1: eine Aufsicht auf einen Piezo-Aktuator gemäß einer Ausführungsform der Erfindung;
- Fig. 2: eine Seitenansicht auf den Piezo-Aktuator von Fig. 1;
- Fig. 3: eine Frontansicht auf den Piezo-Aktuator von Fig. 1;
- Fig. 4: eine Schnittansicht eines Piezo-Aktuators mit zwei Piezoelementen;
- Fig. 5: eine Schnittansicht eines Piezo-Aktuators mit vier Piezoelementen;
- Fig. 6: ein Ablaufdiagramm zur Veranschaulichung verschiedener Prozessschritte während des Betriebs des Piezo-Aktuators von Fig. 5; und
- Fig. 7a-7c: verschiedene Diagramme zu Darstellung des zeitlichen Verlaufs verschiedener Kenngrößen im Betrieb des Piezo-Aktuators von Fig. 5.

### DETAILLIERTE BESCHREIBUNG BEVORZUGTER AUSFÜHRUNGSFORMEN

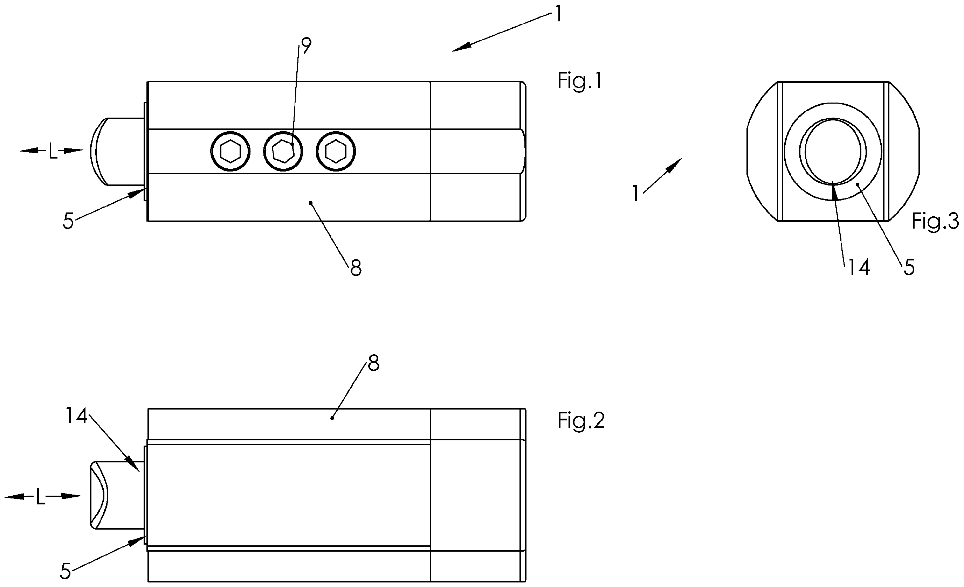

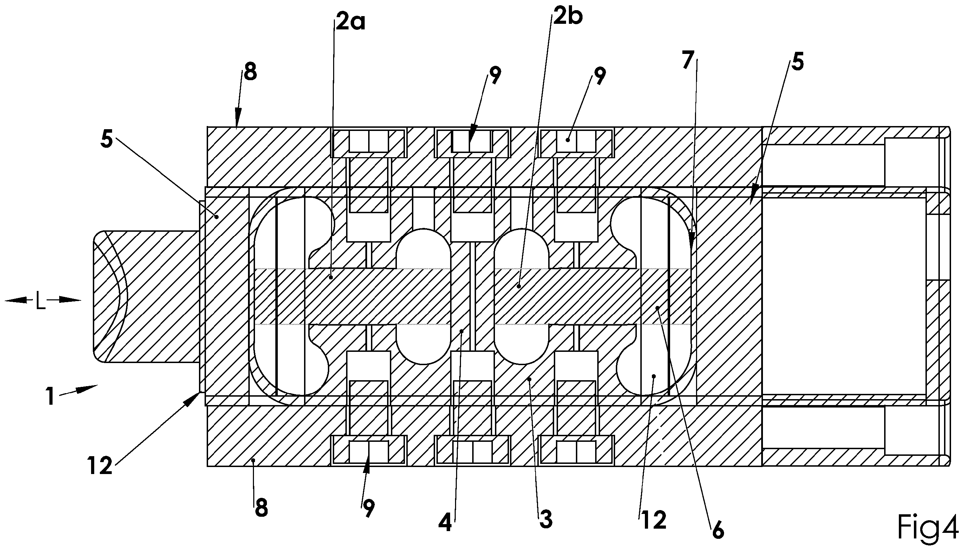

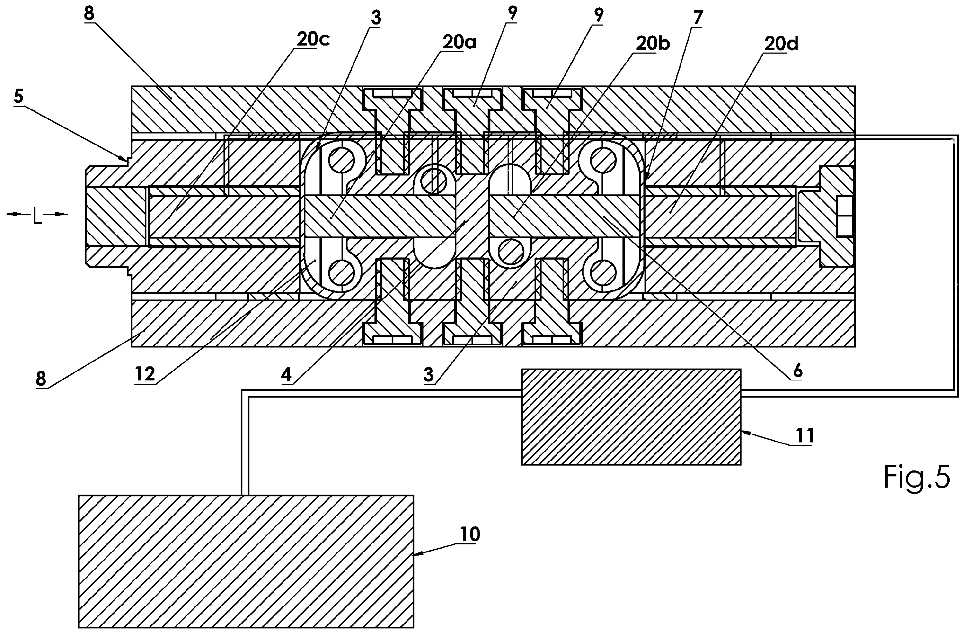

Die Fig. 1-3 zeigen verschiedene Ansichten auf einen Piezo-Aktuator 1 mit mehreren in Reihe angeordneten Piezoelementen 2a-2d, die alle in derselben Richtung ausgerichtet sind (siehe auch Fig. 4 oder Fig. 5). Der Piezo-Aktuator 1 umfasst ein Gehäuse 8 und einen im Gehäuse 8 in einer Längsrichtung L beweglich angeordneten Schlitten 5, der bei entsprechender Ansteuerung der Piezoelemente 2a, 2b eine Vorwärts- oder Rückwärtsbewegung in Längsrichtung L ausführt. Der Schlitten 5 hat ein freies, aus dem Gehäuse 8 herausragendes Ende 14, an dem eine Bewegung bzw. Kraft übertragen werden kann.

Im dem in Fig. 4 dargestellten Ausführungsbeispiel umfasst der Piezo-Aktuator 1 zwei in Reihe angeordnete Piezoelemente 2a, 2b, zwischen denen ein Widerlager 4 angeordnet ist, an dem sich die Piezoelemente 2a, 2b im Betrieb abstützen. Die Piezoelemente 2a, 2b sind hier in einer Halterung 3 angeordnet, die im Wesentlichen zur einfacheren Assemblierung des Piezo-Aktuators 1 dient, da mehrere Piezoelemente 2a, 2b gleichzeitig in den Schlitten 5 passgenau eingesetzt werden können. Das vorstehend genannte Widerlager 4 ist bei dieser Ausführungsform ein Teil der Halterung 3.

Um den Schlitten 5 vorwärts (in Fig. 4 nach links) zu bewegen, wird das Piezoelement 2a derart angesteuert, dass es sich mechanisch in der Längsrichtung L ausdehnt; das andere Piezoelement 2b wird dagegen synchron derart angesteuert, dass es mechanisch in der Längsrichtung L kontrahiert. Da das Widerlager 4 bezüglich des Schlittens 5 ortsfest angeordnet ist, hat die vorstehend genannte Ansteuerung der Piezoelemente 2a, 2b zur Folge, dass sich der Schlitten 5 nach links bewegt. Bei einer umgekehrten Ansteuerung der Piezoelemente 2a, 2b bewegt sich der Schlitten 5 dagegen nach rechts in Rückwärtsrichtung.

Um den Piezo-Aktuator in eine vorgespannte Null-Position zu bringen, werden die beiden Piezoelemente 2a, 2b in einer ersten Phase zunächst derart angesteuert, dass sie sich jeweils mechanisch ausdehnen und innerhalb des Schlittens 5 verspannen. Die dabei an den Piezoelementen 2a, 2b anliegende Spannung ist vorzugsweise für beide Piezoelemente 2a, 2b gleich groß. Die Spannung kann beispielsweise jeweils 50 V betragen, so dass sich beide Piezoelemente 2a, 2b z. B. jeweils um 10 µm ausdehnen. Zum Ausführen einer Vorwärtsbewegung wird dann, wie bereits beschrieben, die Spannung am Piezoelement 2a beispielsweise erhöht und am zweiten Piezoelement 2b synchron verringert, so dass sich der Schlitten 5 in Fig. 4 nach links verlagert. Zum Ausführen einer Rückwärtsbewegung werden die Spannungen jeweils in umgekehrter Richtung verändert.

Fig. 5 zeigt eine seitliche Schnittansicht des Piezo-Aktuators von Fig. 1, in der die interne Konstruktion des Aktuators 1 gut zu erkennen ist. Wie in Fig. 4 zu sehen ist, umfasst der Piezo-Aktuator 1 vier in Reihe angeordnete Piezoelemente 2a-2d, zwischen denen ein Widerlager 4 angeordnet ist, an dem sich die Piezoelemente 2a, 2b im Betrieb abstützen. Die Piezoelemente 2a, 2b sind hier in einer Halterung 3 angeordnet, die im Wesentlichen zur einfacheren Assemblierung des Piezo-Aktuators 1 dient, da mehrere Piezoelemente 2a, 2b gleichzeitig in den Schlitten 5 passgenau eingesetzt werden können. Alternativ könnten auch die beiden äußeren Piezoelemente 2c, 2d in die Halterung mit integriert werden.

Die beiden in der Mitte angeordneten Piezoelemente 2a, 2b dienen im Wesentlichen als Arbeitselemente 20a, 20b zum Bewegen des Schlittens 5 in der Vorwärts- oder Rückwärtsrichtung. Die beiden außen angeordneten Piezoelemente 2c, 2d dienen dagegen als Einstellelemente 20c, 20d, mit denen die Null-Position des Piezo-Aktuators 1 eingestellt werden kann. Die Funktion des Piezo-Aktuators und die Steuerung der einzelnen Piezoelemente 2a-2d werden nachfolgend noch genauer erläutert.

Das vorstehend genannte Widerlager 4 ist bei dieser Ausführungsform ein Teil der Halterung 3. Alternativ könnte das Widerlager 4 aber auch ein Teil des Gehäuses 8 sein oder am Gehäuse 8 befestigt sein. Die Halterung 3 ist ebenfalls optional.

Um den Schlitten 5 vorwärts (in Fig. 5 nach links) zu bewegen, wird das Piezoelement 2a derart angesteuert, dass es sich mechanisch in der Längsrichtung L ausdehnt; das andere Piezoelement 2b wird dagegen synchron derart angesteuert, dass es mechanisch in der Längsrichtung L kontrahiert. Da das Widerlager 4 bezüglich des Schlittens 5 ortsfest angeordnet ist, hat die vorstehend genannte Ansteuerung der Piezoelemente 2a, 2b zur Folge, dass sich der Schlitten 5 nach links bewegt. Bei einer umgekehrten Ansteuerung der Piezoelemente 2a, 2b bewegt sich der Schlitten 5 dagegen nach rechts in Rückwärtsrichtung. Die an den äußeren Piezoelementen 2c, 2d anliegende Spannung bleibt dabei vorzugsweise konstant.

Wie zu erkennen ist, arbeitet immer eines der beiden Piezoelemente 2a, 2b im Druckmodus, d. h. es dehnt sich in Längsrichtung L aus. Das andere Piezoelement 2a, 2b kontrahiert gleichzeitig. Das sich ausdehnende Piezoelement 2a (bei einer Bewegung in Vorwärtsrichtung) bzw. 2b (bei einer Bewegung in Rückwärtsrichtung) ist jeweils für die Kraftübertragung maßgeblich, so dass in beide Richtungen hohe Kräfte übertragen werden können.

Im dargestellten Ausführungsbeispiel sind die Piezoelemente 2a, 2b in einer gemeinsamen Halterung 3 angeordnet, die wiederum in den Schlitten 5 eingesetzt ist. Zur Befestigung der Halterung 3 am Gehäuse 8 sind mehrere Schraubverbindungen 9 vorgesehen.

Die Halterung 3 ist ferner so ausgebildet, dass die einzelnen Piezoelemente 2a, 2b jeweils an einem mittleren Abschnitt der Piezoelemente 2a, 2b festgeklemmt werden. Hierzu umfasst die Halterung 3 jeweils zwei gegenüberliegend angeordnete Klemmabschnitte, zwischen denen das jeweilige Piezoelement 2a, 2b festgeklemmt wird. Die Enden 6 der Piezoelemente 2a, 2b sind dagegen frei und werden nicht von der Seite her festgeklemmt. Die Haltevorrichtung 3 umfasst somit für jedes der Piezoelemente 2a, 2b eine Kammer 12, in die das jeweilige Piezoelement 2a, 2b eingepresst wird.

Wie in Fig. 5 zu erkennen ist, umgibt die Halterung 3 die Piezoelemente 2a, 2b entlang eines geschlossenen Umfangs und hat entsprechend zwei in Längsrichtung L verlaufende Abschnitte und an jeder Stirnseite einen quer zur Längsrichtung verlaufenden Abschnitt 7, an dem die voneinander weg zeigenden Enden 6 der Piezoelemente 2a, 2b anliegen. Die quer verlaufenden Abschnitte 7 sind dabei flexibel ausgebildet, so dass sie sich bei einer Vorwärts- oder Rückwärtsbewegung elastisch verformen können und die Kraftübertragung auf den Schlitten 5 nicht bzw. nur unwesentlich beeinträchtigen.

Die einzelnen Piezoelemente 2a, 2b werden vorzugsweise an ihren lateralen Seiten bzw. Längsseiten elektrisch kontaktiert. An den in Längsrichtung L zeigenden Stirnseiten befinden sich vorzugsweise keine Elektroden.

Der Betrieb des Piezo-Aktuators 1 von Fig. 5 untergliedert sich im Wesentlichen in zwei Phasen, nämlich eine Null-Position-Einstellphase (erste Phase), in der eine gewünschte Null-Position des Piezo-Aktuators eingestellt wird, und eine nachfolgende Arbeitsphase (zweite Phase), in der der Piezo-Aktuator eine Vorwärts- oder Rückwärtsbewegung ausführt.

Um den Piezo-Aktuator in eine gewünschte Null-Position zu bringen, werden die beiden innen liegenden Piezoelemente 2a, 2b, die auch als Arbeitselemente 20a, 20b bezeichnet werden, zunächst derart angesteuert, dass sie sich jeweils mechanisch ausdehnen und innerhalb des Schlittens 5 verspannen. Die an den Piezoelementen 2a, 2b anliegende Spannung ist vorzugsweise für beide Piezoelemente 2a, 2b gleich groß. Die Spannung kann beispielsweise jeweils 50 V betragen, so dass sich beide Piezoelemente 2a, 2b z. B. jeweils um 10 µm ausdehnen. Auch an die beiden äußeren Piezoelemente 2c, 2d, die auch als Einstellelemente 20c, 20d bezeichnet werden, wird jeweils eine Spannung angelegt, die so gepolt ist, dass sich jedes der Einstellelemente ausdehnt. Dadurch verspannt sich die gesamte Piezo-Anordnung innerhalb des Bauraums, in dem die Piezoelemente 2a-2d angeordnet sind. Die an die Einstellelemente 20c, 20d angelegten Spannungen sind vorzugsweise ebenfalls gleich groß.

Nach dem Anlegen der Spannungen werden dann die an den einzelnen Einstellelementen 20c, 20d anliegenden Spannungen verändert, um den Piezo-Aktuator 1 in die gewünschte Null-Position zu bringen. Hierzu kann z. B. die am Einstellelement 20c anliegende Spannung erhöht und die an einem Einstellelement 20d anliegende Spannung reduziert werden, so dass sich das Einstellelement 2c ausdehnt und das Einstellelement 20d kontrahiert. Der Schlitten 5 bewegt sich in diesem Fall in Fig. 5 nach rechts. Bei einer Spannungsänderung mit dem umgekehrten Vorzeichen würde sich der Schlitten 5 nach links bewegen. Die an den Arbeitselementen 20a, 20b anliegende Spannung bleibt währenddessen vorzugsweise konstant.

Alternativ könnte die Nullpunkteinstellung auch ausgehend von einem Spannungsniveau durchgeführt werden, bei dem an den Arbeitselementen 20a, 20b und/oder den Einstellelementen 20c, 20d eine Spannung von 0 V anliegt.

Nach dem Einstellen der Null-Position folgt die eigentliche Arbeitsphase, in der die Arbeitselemente 20a, 20b so angesteuert werden, dass der Schlitten 5 eine Vorwärts- oder eine Rückwärtsbewegung ausführt. Zum Ausführen einer Vorwärtsbewegung wird, wie bereits beschrieben, die Spannung am Piezoelement 2a beispielsweise erhöht und am zweiten Piezoelement 2b synchron verringert, so dass sich der Schlitten 5 in Fig. 5 nach links verlagert. Zum Ausführen einer Rückwärtsbewegung werden die Spannungen jeweils mit umgekehrtem Vorzeichen verändert. Die an den Piezoelementen 2c, 2d anliegende Spannung bleibt in der Arbeitsphase des Piezo-Aktuators 1 vorzugsweise konstant, während die an den Arbeitselementen 20a, 20b anliegende Spannung variiert wird.

Eine umgekehrte Funktionalität der beiden Piezoelement-Paare 2a, 2b; 2c, 2d ist ebenfalls möglich.

Statt die Piezoelemente 2c, 2d in der Arbeitsphase mit einer konstanten Spannung zu betreiben, könnten diese in der Arbeitsphase auch als Arbeitselemente betrieben werden, um den Schlitten 5 in der Längsrichtung L anzutreiben. So könnten z. B. die auf derselben Seite des Widerlagers 4 angeordneten Piezoelemente 2a, 2c bzw. 2b, 2d jeweils gemeinsam und gleichsinnig angesteuert werden, um eine Vorwärts- bzw. Rückwärtsbewegung zu erzeugen. Zum Ausführen einer Vorwärtsbewegung müssten beispielsweise die Piezoelemente 2a, 2c derart angesteuert werden, dass sie sich mechanisch ausdehnen, während die Piezoelemente 2b, 2d derart angesteuert werden, dass sie mechanisch kontrahieren. Zum Ausführen einer Rückwärtsbewegung wäre es genau umgekehrt.

Die jeweilige Betriebsart kann nach Wunsch vorgegeben werden. Zur Steuerung des Piezo-Aktuators 1 ist eine programmierbare Steuereinheit 10, wie z. B. ein Mikrokontroller und eine Treibereinheit 11 mit Leistungselektronik, vorgesehen.

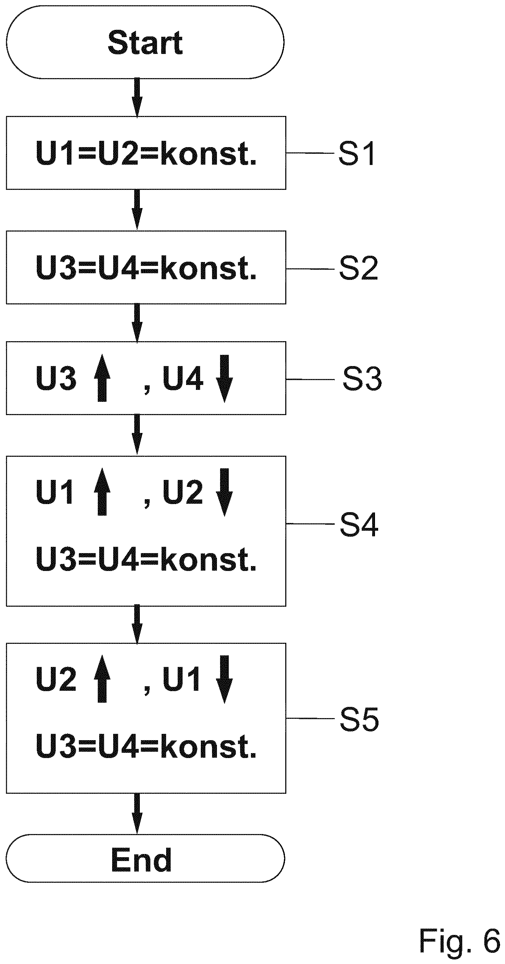

Figur 6 zeigt ein beispielhaftes Flussdiagramm mit verschiedenen Verfahrensschritte, die während des Betriebs des Piezo-Aktuators 1 von Figur 4 durchlaufen werden. Die Verfahrensschritte S1 und S2 gehören dabei zur Nullpunkt-Einstellphase und die Verfahrensschritte S3 und S4 zur nachfolgenden Arbeitsphase, in der der Piezo-Aktuator 1 in Vorwärts- oder Rückwärtsrichtung verfahren wird. Die Figuren 6a und 6b zeigen den zeitlichen Verlauf der zugehörigen Spannungssignale U1-U4, und Figur 6c den Verlauf der Schlittenposition h des Schlittens 5.

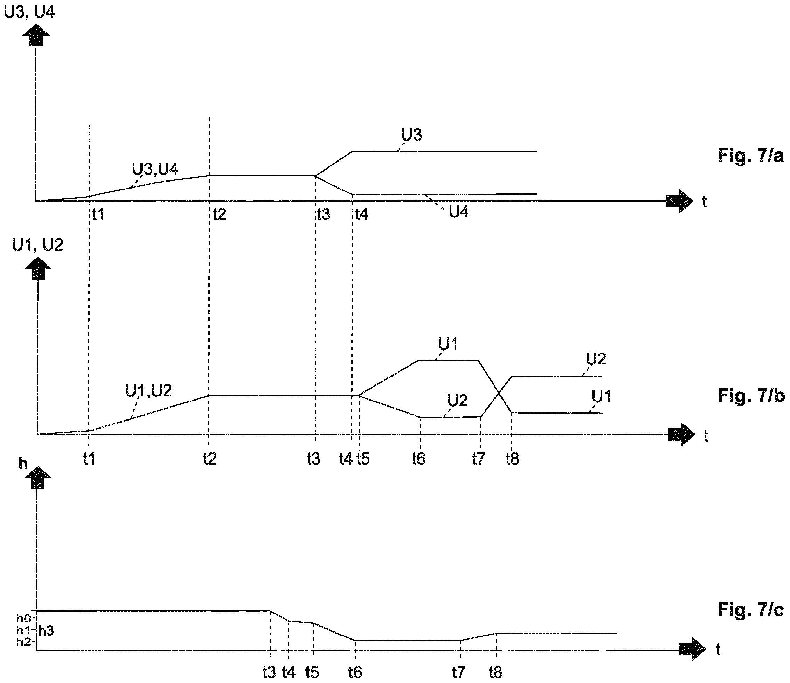

Gemäß Figur 7a beträgt die an den Piezoelementen 2a, 2b anliegende Spannung U1, U2 jeweils 0 V. Die an den Piezoelementen 2c, 2d anliegende Spannung U3, U4 beträgt ebenfalls 0 V (siehe Fig. 7b). Ab dem Zeitpunkt t₁ werden die am Piezoelement 2a anliegende Spannung U1 und die am Piezoelement 2b anliegende Spannung U2 auf einen konstanten Wert gesetzt, wie zum Beispiel 50 V (siehe Schritt S1). Außerdem werden die am Piezoelement 2c anliegende Spannung U3 und die am Piezoelement 2d anliegende Spannung U4 auf einen konstanten Wert gesetzt, wie zum Beispiel 30 V (siehe Schritt S2). Die Spannungen könnten auch gleich groß sein.

Mit zunehmender Spannung U1-U4 dehnen sich die Piezoelemente 2a bis 2d jeweils aus, so dass sich die gesamte Piezoanordnung innerhalb des Schlittens 5 verspannt, wodurch das Spiel der Piezoanordnung innerhalb des Schlittens 5 minimiert wird. Die Lage h des Schlittens 5 verändert sich in der Phase, in der die Piezoelemente auf Vorspannung gebracht werden, nicht oder nur geringfügig, so dass der Schlitten 5 seine Anfangsposition h0 etwa beibehält (siehe Fig. 7c).

Ab dem Zeitpunkt t₄ folgt die eigentliche Einstellung der Null-Position des Piezo-Aktuators 1. Im dargestellten Ausführungsbeispiel soll der Schlitten 5 geringfügig nach vorne beziehungsweise links in Figur 4 verstellt werden. Hierzu wird in Schritt S3 die am Piezoelement 2c anliegende Spannung U3 erhöht und die am Piezoelement 2d anliegende Spannung U4 um den gleichen Betrag verringert. Der Schlitten 5 bewegt sich entsprechend um einen bestimmten Weg nach links und erreicht im Zeitpunkt t₄ eine Position h₁. Diese Position entspricht der Null-Position, der in der nachfolgenden Arbeitsphase den Startpunkt für eine Vorwärts- oder Rückwärtsbewegung des Schlittens 5 darstellt.

Die an den Piezoelementen 2c, 2d anliegenden Spannungen U3, U4 bleiben ab dem Zeitpunkt t₄ konstant. Ab dem Zeitpunkt t₅ werden dann die am Piezoelement 2a anliegende Spannung U1 erhöht und die am Piezoelement 2b anliegende Spannung U2 um den gleichen Betrag reduziert (siehe auch Schritt S4). Die Spannungsänderung der Spannungen U1 und U2 erfolgt dabei vorzugsweise gleichzeitig und synchron, könnte aber auch zeitlich versetzt erfolgen. Da sich das Piezoelement 2a ausdehnt und das Piezoelement 2b zusammenzieht, bewegt sich der Schlitten 5 um einen bestimmten Weg nach links und erreicht im Zeitpunkt t₆ eine Position h₂.

Ab dem Zeitpunkt t₇ werden dann die am Piezoelement 2b anliegende Spannung U2 erhöht und die am Piezoelement 2a anliegende Spannung U1 um den gleichen Betrag reduziert (siehe auch Schritt S5). Die Spannungsänderung der Spannungen U1 und U2 erfolgt dabei vorzugsweise gleichzeitig und synchron, könnte aber auch zeitlich versetzt erfolgen. Da sich das Piezoelement 2b ausdehnt und das Piezoelement 2a zusammenzieht, bewegt sich der Schlitten 5 um einen bestimmten Weg nach rechts und erreicht im Zeitpunkt t₈ eine Position h₃.

## Patentansprüche

1. Piezo-Aktuator (1) mit wenigstens drei Piezoelementen (2a-2d), von denen wenigstens zwei als Arbeitselemente (20a, 20b) betrieben werden, die eine lineare Vorwärts- oder Rückwärtsbewegung ausführen, wobei sich sowohl zum Ausführen der Vorwärts- als auch zum Ausführen der Rückwärtsbewegung wenigstens eines der Arbeitselemente (20a, 20b) mechanisch in einer Längsrichtung (L) ausdehnt und ein anderes der Arbeitselemente (20a, 20b) in der Längsrichtung (L) zusammenzieht,
**dadurch gekennzeichnet, dass**
- die Piezoelemente (2a-2d) innerhalb eines Schlittens (5) in einer Längsrichtung (L) angeordnet sind, der die Bewegung in Vorwärts- oder Rückwärtsrichtung ausführt;
- zwischen zwei der Piezoelemente (2a-2d) ein ortsfest angeordnetes Widerlager (4) vorgesehen ist, an dem sich die Piezoelemente (2a-2d) im Betrieb abstützen, und dass
- eine Steuerung (10, 11) vorgesehen ist, die derart eingerichtet ist, dass:
sie wenigstens ein weiteres der Piezoelemente (2a-2d), als Einstellelement (20c, 20d) betreibt und dabei so ansteuert, dass die gesamte Piezoelement-Anordnung innerhalb des Schlittens (5) mechanisch vorgespannt wird und der Piezo-Aktuator infolgedessen eine entsprechende Null-Position einnimmt, und dass
sie die Arbeitselemente (20a, 20b) in einer nachfolgenden Arbeitsphase derart ansteuert, dass sich sowohl zum Ausführen der Vorwärts- als auch zum Ausführen der Rückwärtsbewegung des Schlittens (5) wenigstens eines der Arbeitselemente (20a, 20b) mechanisch in einer Längsrichtung (L) ausdehnt, und ein anderes der Arbeitselemente (20a, 20b) in der Längsrichtung (L) kontrahiert.

2. Piezo-Aktuator (1) nach Anspruch 1, **dadurch gekennzeichnet, dass** die Steuerung (10, 11) derart eingerichtet ist, dass sie zum Einstellen der Null-Position (hi) eine Spannung an das wenigstens eine Einstellelement (20c, 20d) anlegt und diese Spannung in der nachfolgenden Arbeitsphase konstant hält.

3. Piezo-Aktuator (1) nach Anspruch 1, **dadurch gekennzeichnet, dass** die Steuerung (10, 11) derart eingerichtet ist, dass sie im Falle eines Piezo-Aktuators (1) mit mehreren Einstellelementen (20c, 20d), zum Zwecke der Einstellung einer Null-Position zunächst eine positive Spannung (U3, U4) an die Einstellelemente (20c, 20d) anlegt, um diese vorzuspannen, und die an den Einstellelementen (20c, 20d) anliegenden Spannungen (U3, U4) dann verändert, so dass der Piezo-Aktuator (1) eine entsprechende Null-Position einnimmt.

4. Piezo-Aktuator (1) nach Anspruch 1, **dadurch gekennzeichnet, dass** die Steuerung (10, 11) derart eingerichtet ist, dass sie in der ersten Phase eine konstante, positive Spannung (U1, U2) an die Arbeitselemente (20a, 20b) anlegt, um diese vorzuspannen, und die an den Arbeitselementen (20a, 20b) anliegenden Spannungen (U1, U2) dann verändert, um eine Vorwärts- oder Rückwärtsbewegung auszuführen, so dass sich sowohl beim Ausführen einer Vorwärts- als auch beim Ausführen einer Rückwärtsbewegung wenigstens eines der Arbeitselemente (20a, 20b) mechanisch in einer Längsrichtung (L) ausdehnt, und ein anderes der Arbeitselemente (20a, 20b) in der Längsrichtung (L) kontrahiert.

5. Piezo-Aktuator (1) nach Anspruch 4, **dadurch gekennzeichnet, dass** die Steuerung (10, 11) derart eingerichtet ist, dass sie zum Ausführen der Vorwärts- oder Rückwärtsbewegung die an einem ersten Arbeitselement (20a, 20b) anliegende Spannung (U1, U2) erhöht und die an einem zweiten Arbeitselement (20a, 20b) anliegende Spannung (U1, U2) gleichzeitig reduziert.

6. Piezo-Aktuator (1) nach einem der vorhergehenden Ansprüche, **dadurch gekennzeichnet, dass** wenigstens ein Teil der Piezoelemente (2a-2d) in einer Halterung (3) angeordnet ist.

7. Piezo-Aktuator (1) nach Anspruch 6, **dadurch gekennzeichnet, dass** die Halterung (3) mehrere Kammern (12) aufweist, in denen jeweils ein Piezoelement (2a-2d) angeordnet ist.

8. Piezo-Aktuator (1) nach Anspruch 6 oder 7, **dadurch gekennzeichnet, dass** die Halterung (3) quer zur Bewegungsrichtung (L) verlaufende Abschnitte (7) aufweist, an denen die äußeren, voneinander weg zeigenden Enden (6) von Piezoelementen (2a-2d) anliegen, wobei die quer verlaufenden Abschnitte (7) flexibel ausgebildet sind, so dass sie sich bei einer Vorwärts- oder Rückwärtsbewegung elastisch verformen.

9. Piezo-Aktuator (1) nach einem der Ansprüche 6 bis 8 **dadurch gekennzeichnet, dass** die Halterung (3) ein Widerlager (4) umfasst.

10. Piezo-Aktuator (1) nach einem der Ansprüche 6 bis 9, **dadurch gekennzeichnet, dass** die Halterung (3) in einem Schlitten (5) angeordnet ist.

11. Piezo-Aktuator (1) nach Anspruch 10, **dadurch gekennzeichnet, dass** der Schlitten (5) innerhalb eines Gehäuses (8) beweglich angeordnet ist.

12. Piezo-Aktuator (1) nach Anspruch 11, **dadurch gekennzeichnet, dass** die Halterung (3) am Gehäuse (8) fest montiert ist.

13. Verfahren zum Betreiben eines Piezo-Aktuators (1) mit zwei Piezoelementen (2a-2d), die innerhalb eines Schlittens (5) in einer Längsrichtung (L) angeordnet sind, der eine Bewegung in Vorwärts- oder Rückwärtsrichtung ausführt, -**gekennzeichnet durch** folgende Schritte:
- in einer ersten Phase: Einstellen einer Null-Position des Piezo-Aktuators (1), indem an wenigstens eines der Piezoelemente (2a, 2b) eine konstante, positive Spannung angelegt wird, so dass die gesamte Piezoelement-Anordnung innerhalb des Schlittens (5) mechanisch vorgespannt wird und der Piezo-Aktuator (1) infolgedessen eine entsprechende Null-Position (h₁) einnimmt, und
- in einer nachfolgenden Arbeitsphase: Ausführen einer Vorwärts- oder einer Rückwärtsbewegung des Schlittens (5) mit Hilfe der beiden Piezoelemente (2a, 2b), wobei sowohl zum Ausführen der Vorwärtsbewegung als auch zum Ausführen der Rückwärtsbewegung des Schlittens (5) die an einem der Piezoelemente (2a, 2b) anliegende Spannung erhöht wird, so dass es sich mechanisch in einer Längsrichtung (L) ausdehnt, und die an dem anderen Piezoelement (2a, 2b) anliegende Spannung im Wesentlichen gleichzeitig verringert wird, so dass es sich mechanisch in einer Längsrichtung (L) zusammenzieht.

14. Verfahren zum Betreiben eines Piezo-Aktuators (1) mit wenigstens drei Piezoelementen (2a-2d), die innerhalb eines Schlittens (5) in einer Längsrichtung (L) angeordnet sind, der eine Bewegung in Vorwärts- oder Rückwärtsrichtung ausführt, und von denen wenigstens ein erstes und ein zweites als Arbeitselemente (20a, 20b) betrieben werden, um eine lineare Vorwärts- oder Rückwärtsbewegung des Schlittens (5) zu bewirken, und wenigstens ein weiteres Piezoelement (2c, 2d) als Einstellelement (20c, 20d) dient, um eine Null-Position des Piezo-Aktuators (1) einzustellen, **gekennzeichnet durch** folgende Schritte:
- in einer ersten Phase: Einstellen einer Null-Position des Piezo-Aktuators (1), indem an das wenigstens eine Einstellelement (20c, 20d) eine Spannung (U3, U4) angelegt wird, so dass die gesamte Piezoelement-Anordnung innerhalb des Schlittens (5) mechanisch vorgespannt wird und der Piezo-Aktuator infolgedessen eine entsprechende Null-Position (h₁) einnimmt, und
- in einer nachfolgenden Arbeitsphase: Ausführen einer Vorwärts- oder einer Rückwärtsbewegung des Schlittens (5) mit Hilfe der Arbeitselemente (20a, 20b), wobei die an den Arbeitselementen (20a, 20b) anliegenden Spannungen so variiert werden, dass sich sowohl zum Ausführen der Vorwärtsbewegung als auch zum Ausführen der Rückwärtsbewegung des Schlittens (5) wenigstens eines der Arbeitselemente (20a, 20b) mechanisch in einer Längsrichtung (L) ausdehnt, und ein anderes der Arbeitselemente (20a, 20b) mechanisch in einer Längsrichtung (L) kontrahiert.

15. Verfahren nach Anspruch 14, **dadurch gekennzeichnet, dass** die an dem wenigstens einen Einstellelement (20c, 20d) anliegende Spannung in der Arbeitsphase im Wesentlichen konstant gehalten wird.

16. Verfahren nach Anspruch 14 oder 15, **dadurch gekennzeichnet, dass** an die Arbeitselemente (20a, 20b) in der ersten Phase zunächst eine konstante Spannung (U1, U2) angelegt wird, um die Arbeitselemente (20a, 20b) vorzuspannen.

17. Verfahren nach einem der Ansprüche 14 bis 16, **dadurch gekennzeichnet, dass** die als Arbeitselemente (20a, 20b) betriebenen Piezoelemente (2a-2d) derart angesteuert werden, dass die längenmäßige Ausdehnung des wenigstens einen ersten Piezoelements (2a, 2b) synchron mit der längenmäßigen Kontraktion des wenigstens einen zweiten Piezoelements (2a, b) einhergeht.

## Claims

1. Piezoelectric actuator (1) having at least three piezo-elements (2a-2d), at least two of which are operated as working elements (20a, 20b), which perform a linear forward or backward movement, wherein at least one of the working elements (20a, 20b) mechanically expands in a longitudinal direction (7) for performing the forward movement and for performing the backward movement, and another of the working elements (20a, 20b) contracts in the longitudinal direction (L),
**characterised in that**
- the piezo-elements (2a-2d) are arranged inside a carriage (5) in a longitudinal direction (L), said carriage performing the movement in the forward or backward direction;
- a fixedly arranged counter bearing (4) is provided between two of the piezo-elements (2a-2d), on which counter bearing the piezo elements (2a-2d) are supported during operation, and
- a control device (10, 11) is provided which is set up in such a way that:
it operates at least one further piezo-element (2a-2d) as a setting element (20c, 20d) and, in doing so, is controlled in such a way that the whole piezo-element arrangement inside the carriage (5) is mechanically pre-tensioned and the piezoelectric actuator assumes a corresponding zero position as a consequence, and
it controls the working elements (20a, 20b) in a subsequent working phase in such a way that at least one of the working elements (20a, 20b) mechanically expands in a longitudinal direction (L) for performing the forward movement and for performing the backward movement of the carriage (5), and another of the working elements (20a, 20b) contracts in the longitudinal direction (L).

2. Piezoelectric actuator (1) according to claim 1, **characterised in that** the control device (10, 11) is set up in such a way that it applies a voltage to the at least one setting element (20c, 20d) for setting the zero position (h₁) and holds this voltage constant in the subsequent working phase.

3. Piezoelectric actuator (1) according to claim 1, **characterised in that** the control device (10, 11) is set up in such a way that, in the case of a piezoelectric actuator (1) having several setting elements (20c, 20d), firstly it applies a positive voltage (U3, U4) to the setting elements (20c, 20d) for the purpose of setting a zero position, in order to pre-tension them, and then changes the voltages (U3, U4) applied to the setting elements (20c, 20d) such that the piezoelectric actuator (1) assumes a corresponding zero position.

4. Piezoelectric actuator (1) according to claim 1, **characterised in that** the control device (10, 11) is set up in such a way that, in the first phase, it applies a constant positive voltage (U1, U2) to the working elements (20a, 20b) in order to pre-tension them and then changes the voltages (U1, U2) applied to the working elements (20a, 20b) in order to perform a forward or backward movement, such that at least one of the working elements (20a, 20b) mechanically expands in a longitudinal direction (L) both when performing a forward movement and when performing a backward movement, and another of the working elements (20a, 20b) contracts in the longitudinal direction (L).

5. Piezoelectric actuator (1) according to claim 4, **characterised in that** the control device (10, 11) is set up in such a way that it increases the voltage (U1, U2) applied to a first working element (20a, 20b) for performing the forward or backward movement and simultaneously reduces the voltage (U1, U2) applied to a second working element (20a, 20b).

6. Piezoelectric actuator (1) according to one of the preceding claims, **characterised in that** at least one part of the piezo-elements (2a-2d) is arranged in a bracket (3).

7. Piezoelectric actuator (1) according to claim 6, **characterised in that** the bracket (3) has several chambers (12), in which in each case one piezo-element (2a-2d) is arranged.

8. Piezoelectric actuator (1) according to claim 6 or 7, **characterised in that** the bracket (3) has sections (7) running transversely to the movement direction (L), on which sections the outer ends (6) of piezo-elements (2a-2d) pointing away from one another abut, wherein the transversely running sections (7) are formed flexibly, such that they elastically deform in the event of a forward or backward movement.

9. Piezoelectric actuator (1) according to one of claims 6 to 8, **characterised in that** the bracket (3) comprises a counter bearing (4).

10. Piezoelectric actuator (1) according to one of claims 6 to 9, **characterised in that** the bracket (3) is arranged in a carriage (5).

11. Piezoelectric actuator (1) according to claim 10, **characterised in that** the carriage (5) is moveably arranged inside a housing (8).

12. Piezoelectric actuator (1) according to claim 11, **characterised in that** the bracket (3) is fixedly mounted on the housing (8).

13. Method for operating a piezoelectric actuator (1) having two piezo-elements (2a-2d), which are arranged inside a carriage (5) in a longitudinal direction (L), which performs a movement in the forward or backward direction, **characterised by** the following steps:
- in a first phase: setting a zero position of the piezoelectric actuator (1) by a constant, positive voltage being applied to at least one of the piezo-elements (2a, 2b), such that the whole piezo-element arrangement is mechanically pre-tensioned inside the carriage (5) and the piezoelectric actuator (1) assumes a corresponding zero position (hi) as a consequence, and
- in a subsequent working phase: performing a forward or a backward movement of the carriage (5) by means of the two piezo-elements (2a, 2b), wherein the voltage applied to one of the piezo-elements (2a, 2b) is increased both for performing the forward movement and for performing the backward movement of the carriage (5), such that it mechanically expands in a longitudinal direction (L), and the voltage applied to the other piezo-elements (2a, 2b) is simultaneously substantially reduced, such that it mechanically contracts in a longitudinal direction (L).

14. Method for operating a piezoelectric actuator (1) having at least three piezo-elements (2a-2d), which are arranged inside a carriage (5) in a longitudinal direction (L), which performs a movement in a forward or backward direction, and at least one first and one second of which are operated as working elements (20a, 20b), in order to cause a linear forward or backward movement of the carriage (5), and at least one further piezo-element (2c, 2d) serves as the setting element (20c, 20d) in order to set a zero position of the piezoelectric actuator (1), **characterised by** the following steps:
- in a first phase: setting a zero position of the piezoelectric actuator (1) by a voltage (U3, U4) being applied to the at least one setting element (20c, 20d), such that the whole piezo-element arrangement is mechanically pre-tensioned inside the carriage (5) and the piezoelectric actuator assumes a corresponding zero position (hi) as a consequence, and
- in a subsequent working phase: performing a forward or a backward movement of the carriage (5) with the aid of the working elements (20a, 20b), wherein the voltages applied to the working elements (20a, 20b) are varied in such a way that at least one of the working elements (20a, 20b) mechanically expands in a longitudinal direction (L) both for performing the forward movement and for performing the backward movement of the carriage (5), and a different working element (20a, 20b) mechanically contracts in a longitudinal direction (L).

15. Method according to claim 14, **characterised in that** the voltage applied to the at least one setting element (20c, 20d) is kept substantially constant in the working phase.

16. Method according to claim 14 or 15, **characterised in that** firstly a constant voltage (U1, U2) is applied to the working elements (20a, 20b) in the first phase in order to pre-tension the working elements (20a, 20b).

17. Method according to one of claims 14 to 16, **characterised in that** the piezo-elements (2a-2d) operating as working elements (20a, 20b) are controlled in such a way that the lengthwise expansion of the at least one first piezo-element (2a, 2b) emerges synchronically with the lengthwise contraction of the at least one second piezo-element (2a, b).

## Revendications

1. Piézo-actuateur (1) avec au moins trois éléments piézoélectriques (2a à 2d), parmi lesquels au moins deux fonctionnent en tant qu'éléments de travail (20a, 20b) qui présentent un mouvement vers l'avant ou vers l'arrière linéaire, où, à la fois pour l'exécution du mouvement vers l'avant, et également du mouvement vers l'arrière, au moins un des éléments de travail (20a, 20b) s'étire mécaniquement dans une direction longitudinale (L) et un autre des éléments de travail (20a, 20b) se contracte dans la direction longitudinale (L),
**caractérisé en ce que**
- les éléments piézoélectriques (2a à 2d) sont disposés à l'intérieur d'un chariot (5) dans une direction longitudinale (L) qui exécute le mouvement vers l'avant ou vers l'arrière ;
- une butée (4), sur laquelle s'appuient les éléments piézoélectriques (2a à 2d) en fonctionnement, disposée à un endroit fixe est prévue entre deux des éléments piézoélectriques (2a à 2d), et
- qu'une commande (10, 11) est prévue, qui est conçue de telle manière qu'elle actionne au moins un nouveau parmi les éléments piézoélectriques (2a à 2d) en tant qu'élément de réglage (20c, 20d) et le démarre de telle manière que l'ensemble d'éléments piézoélectriques est précontraint mécaniquement en traction à l'intérieur du chariot (5) et le piézo-actuateur adopte de ce fait une position zéro correspondante, et
qu'elle démarre les éléments de travail (20a, 20b) dans une phase de travail ultérieure de telle manière qu'à la fois pour l'exécution du mouvement vers l'avant, et également pour l'exécution du mouvement vers l'arrière du chariot (5), au moins un des éléments de travail (20a, 20b) s'étire mécaniquement dans une direction longitudinale (L) et un autre des éléments de travail (20a, 20b) se contacte dans la direction longitudinale (L).

2. Piézo-actuateur (1) selon la revendication 1, **caractérisé en ce que** la commande (10, 11) est conçue de telle manière qu'elle applique une tension à l'au moins un élément de réglage (20c, 20d) pour le réglage de la position zéro (hi) et conserve cette tension constante dans la phase de travail ultérieure.

3. Piézo-actuateur (1) selon la revendication 1, **caractérisé en ce que** la commande (10, 11) est conçue de manière à ce que, dans le cas d'un piézo-actuateur (1) avec plusieurs éléments de réglage (20c, 20d), dans le but du réglage d'une position zéro, une tension positive (U3, U4) est d'abord appliquée aux éléments de réglage (20c, 20d) afin de précontraindre ceux-ci, et ensuite modifie les tensions (U3, U4) appliquée aux éléments de réglage (20c, 20d) de sorte que le piézo-actuateur (1) adopte une position zéro correspondante.

4. Piézo-actuateur (1) selon la revendication 1, **caractérisé en ce que** la commande (10, 11) est conçue de manière à ce que, dans la première phase, une tension positive constante (U1, U2) est appliquée aux éléments de travail (20a, 20b) afin de les précontraindre et les tensions (U1, U2) appliquées aux éléments de travail (20a, 20b) sont ensuite modifiées pour exécuter un mouvement vers l'avant ou vers l'arrière de sorte qu'à la fois lors de l'exécution d'un mouvement vers l'avant et également de l'exécution d'un mouvement vers l'arrière, au moins un des éléments de travail (20a, 20b) s'étire mécaniquement dans une direction longitudinale (L) et un autre des éléments de travail (20a, 20b) se contracte dans la direction longitudinale (L).

5. Piézo-actuateur (1) selon la revendication 4, **caractérisé en ce que** la commande (10, 11) est conçue de manière à ce que, pour l'exécution du mouvement vers l'avant ou vers l'arrière, la tension (U1, U2) appliquée sur un premier élément de travail (20a, 20b) augmente et la tension (U1, U2) appliquée à un second élément de travail (20a, 20b) diminue simultanément.

6. Piézo-actuateur (1) selon l'une des revendications précédentes, **caractérisé en ce qu'**au moins une partie des éléments piézoélectriques (2a à 2d) est disposée dans un support (3).

7. Piézo-actuateur (1) selon la revendication 6, **caractérisé en ce que** le support (3) présente plusieurs compartiments (12) dans lesquels un élément piézoélectrique (2a à 2d) est respectivement disposé.

8. Piézo-actuateur (1) selon la revendication 6 ou la revendication 7, **caractérisé en ce que** le support (3) présente des sections (7) s'étendant perpendiculairement par rapport à la direction du mouvement (L) dans lesquelles les extrémités (6) extérieures, pointant au loin les unes par rapport aux autres, d'éléments piézoélectriques (2a à 2d) s'appliquent, où les sections (7) s'étendant perpendiculairement sont conçue souples de sorte qu'elles se déforment de manière élastique lors d'un mouvement vers l'avant ou vers l'arrière.

9. Piézo-actuateur (1) selon l'une des revendications 6 à 8, **caractérisé en ce que** le support (3) comprend une butée (4).

10. Piézo-actuateur (1) selon l'une des revendications 6 à 9, **caractérisé en ce que** le support (3) est disposé dans un chariot (5).

11. Piézo-actuateur (1) selon la revendication 10, **caractérisé en ce que** le chariot (5) est disposé mobile à l'intérieur d'un boîtier (8).

12. Piézo-actuateur (1) selon la revendication 11, **caractérisé en ce que** le support (3) est solidement monté sur le boîtier (8).

13. Procédé de mise en œuvre d'un piézo-actuateur (1) avec deux éléments piézoélectriques (2a à 2d) qui sont disposés à l'intérieur d'un chariot (5) dans une direction longitudinale (L) qui exécute un mouvement dans une direction vers l'avant ou vers l'arrière, **caractérisé par** les étapes suivantes :
- dans une première phase : le réglage d'une position zéro du piézo-actuateur (1) en ce qu'une tension positive constante est appliquée au niveau d'au moins un des éléments piézoélectriques (2a, 2b) de sorte que l'ensemble d'éléments piézoélectriques complet est précontraint mécaniquement à l'intérieur du chariot (5) et le piézo-actuateur (1) adopte en conséquence une position zéro (hi) correspondante, et
- dans une phase de travail ultérieure : l'exécution d'un mouvement vers l'avant ou vers l'arrière du chariot (5) à l'aide des deux éléments piézoélectriques (2a, 2d), où à la fois pour l'exécution du mouvement vers l'avant et également pour l'exécution du mouvement vers l'arrière du chariot (5), la tension appliquée à l'un des éléments piézoélectriques (2a, 2b) est augmentée de sorte qu'il s'étire mécaniquement dans une direction longitudinale (L) et la tension appliquée à l'autre élément piézoélectrique (2a, 2b) diminue dans l'ensemble simultanément de sorte qu'il se contracte mécaniquement dans une direction longitudinale (L).

14. Procédé de mise en œuvre d'un piézo-actuateur (1) avec au moins trois éléments piézoélectriques (2a à 2d) qui sont disposés à l'intérieur d'un chariot (5) dans une direction longitudinale (L) qui exécute un mouvement dans une direction vers l'avant ou vers l'arrière, et parmi lesquels au moins un premier et un deuxième fonctionnent en tant qu'éléments de travail (20a, 20b) afin de provoquer un mouvement linéaire vers l'avant ou vers l'arrière du chariot (5) et au moins un autre élément piézoélectrique (2c, 2d) sert d'élément de réglage (20c, 20d) afin de régler une position zéro du piézo-actuateur (1), **caractérisé par** les étapes suivantes :
- dans une première phase : le réglage d'une position zéro du piézo-actuateur (1) en ce qu'une tension (U3, U4) est appliquée au niveau de l'au moins un élément de réglage (20c, 20d) de sorte que l'ensemble d'éléments piézoélectriques complet est précontraint mécaniquement à l'intérieur du chariot (5) et le piézo-actuateur adopte en conséquence une position zéro (hi) correspondante, et
- dans une phase de travail ultérieure : l'exécution d'un mouvement vers l'avant ou vers l'arrière du chariot (5) à l'aide des deux éléments de travail (20a, 20b), où les tensions appliquées sur les éléments de travail (20a, 20b) sont variées de sorte qu'à la fois pour l'exécution du mouvement vers l'avant et également pour l'exécution du mouvement vers l'arrière du chariot (5), au moins un des éléments de travail (20a, 20b) s'étire mécaniquement dans une direction longitudinale (L) et
un autre des éléments de travail (20a, 20b) se contracte mécaniquement dans une direction longitudinale (L).

15. Procédé selon la revendication 14, **caractérisé en ce que** la tension appliquée à l'au moins un élément de réglage (20c, 20d) est maintenue essentiellement constante dans la phase de travail.

16. Procédé selon la revendication 14 ou la revendication 15, **caractérisé en ce qu'**une tension constante (U1, U2) est d'abord appliquée aux éléments de travail (20a, 20b) dans la première phase afin de précontraindre les éléments de travail (20a, 20b).

17. Procédé selon l'une des revendications 14 à 16, **caractérisé en ce que** les éléments piézoélectriques (2a à 2d) fonctionnant en tant qu'éléments de travail (20a, 20b) sont démarrés de telle manière que l'extension dans le sens longitudinal de l'au moins un premier élément piézoélectrique (2a, 2b) s'effectue de manière synchrone avec la contraction dans le sens longitudinal de l'au moins un deuxième élément piézoélectrique (2a, b).
